# FASCICULE DE BREVET EUROPEEN

(11) **EP 1 043 137 B1**
(45) Date de publication et mention de la délivrance du brevet: **17.11.2004**
(21) Numéro de dépôt: 00440054.5
(22) Date de dépôt: 25.02.2000
(51) Int. Cl.: B29C 35/02, B29C 33/04, B29K 21/00, B29L 23/00

(54) **Dispositif pour la vulcanisation de durits en caoutchouc ou en élastomère analogue**
Vorrichtung zum Vulkanisieren von Gummischläuchen oder dergleichen
Apparatus for vulcanising rubber hoses or similar

(30) Priorité: 25.02.1999 FR 9902484
(43) Date de publication de la demande: 11.10.2000
(73) Titulaire: Andre David S.à.R.L., 44470 Thouare sur Loire (FR)
(72) Inventeur: David, André, 44470 Thouare sur Loire (FR)
(74) Mandataire: Arbousse-Bastide, Jean-Claude Philippe

(56) Documents cités:
- FR-A- 2 231 509
- US-A- 4 065 242
- US-A- 4 455 268
- US-A- 5 151 241
- US-A- 5 345 397
- US-A- 5 624 624
- PATENT ABSTRACTS OF JAPAN vol. 006, no. 199 (M-162), 8 octobre 1982 (1982-10-08) & JP 57 105321 A (AOKI KATASHI), 30 juin 1982 (1982-06-30)

## Description

La présente invention a pour objet un dispositif de vulcanisation de durits en caoutchouc ou en élastomère analogue.

Par sa vulcanisation, on modifie les propriétés du caoutchouc, ou analogue, en sorte qu'il devienne moins sensible aux variations de température et aux solvants, et plus résistant à la rupture et à l'abrasion.

Les durits en caoutchouc, ou analogue, vulcanisées sont essentiellement destinées à véhiculer un fluide, tel que par exemple l'air, l'eau ou l'huile d'un système de refroidissement et/ou de lubrification d'un moteur thermique ou autres applications.

De manière traditionnelle, la vulcanisation d'une durit est réalisée selon soit le procédé qui consiste à emmancher celle-ci sur un mandrin afin qu'elle épouse sa forme, puis à placer l'ensemble dans un autoclave où règnent des conditions particulières de température et de pression de vapeur, soit le procédé qui consiste à placer la durit sur un support et à soumettre l'ensemble à un courant d'air chaud.

Or, ces procédés ne donnent pas entière satisfaction du point de vue de la qualité de la vulcanisation. En effet on peut constater dans une durit de caoutchouc vulcanisée selon l'un des procédés précités, d'une part la présence de bulles, et d'autre part une vulcanisation partielle dans l'épaisseur, ce qui influe sur les qualités de résistance à la rupture et à la chaleur des durits. Ces inconvénients sont notamment liés à la mauvaise diffusion de la chaleur dans l'épaisseur de caoutchouc.

D'autre part, pour pouvoir emmancher les durits sur les mandrins et les en enlever après vulcanisation, il faut utiliser un lubrifiant en quantité relativement importante qui nécessite un lavage desdites durits après vulcanisation.

Par ailleurs, ces procédés présentent des temps improductifs de chargement et de déchargement des autoclaves ou des fours, de montée en température et/ou en pression de ceux-ci, ainsi que de retour aux conditions de pression et de température de déchargement.

Le document FR2231509 décrit un procédé qui consiste à tenir monté sur un mandrin métallique un semi-produit pendant la phase de vulcanisation de manière que la surface intérieure du produit soit sensiblement en contact avec la surface extérieure du mandrin et dont l'énergie thermique nécessaire pour la vulcanisation du semi-produit est transmise de l'intérieur du mandrin grâce à un tube d'arrivée de vapeur comprise entre 180°C et 230°C. En outre une cloche dont les parois sont isolantes est destinée à entourer entièrement le mandrin et la durit de manière à empêcher l'énergie thermique fournie au produit de se transmettre à l'atmosphère ambiante.

Toutefois ce dispositif ne permet pas de garantir une homogénéité de température sur toute la longueur du mandrin et la qualité de l'homogénéité de vulcanisation de la durit. En outre si l'emploi de vapeur d'eau à au moins 100°C permet de chauffer plus ou moins fortement le mandrin, il ne permet pas de refroidir rapidement le mandrin en dessous de 100 °C. D'autre part, ce dispositif qui chauffe le mandrin avec de la vapeur d'eau présente le défaut de créer des poches de condensats, ce qui limite fortement la forme du mandrin qui doit être disposé verticalement être cintré de manière à exclure du parcours de cintrage tous les risques de créer des poches de condensats. D'autre part encore, ce dispositif ne permet pas de vulcaniser des durits aux peroxydes qui se dégradent au contact de l'oxygène de l'air lors de la vulcanisation et qui nécessitent donc une vulcanisation dans une atmosphère neutre. Enfin, dans ce dispositif la durit est placée dans un volume d'air sous une cloche à la pression atmosphérique, or dans le cas de l'utilisation d'une durit multicouches comportant dans son épaisseur un tissu de fibres de renfort, les couches du matériau élastomère ou analogue ne sont pas bien collées entre elles au travers du tissu.

La présente invention a pour but de proposer un dispositif de vulcanisation de durits en caoutchouc ou en élastomère analogue permettant d'obtenir une meilleure vulcanisation que celle obtenue avec les dispositifs actuels.

Ce but est atteint par le dispositif selon la revendication 1. D'autres modes de réalisation sont l'objet des revendications dépendantes.

La valeur de consigne de la température du mandrin entre deux cycles de vulcanisation est déterminée en fonction de la composition du matériau de la durit à vulcaniser de manière à faciliter d'une part les opérations de montage de la durit sur le mandrin avant son cycle de vulcanisation et d'autre part les opérations de dépose de la durit du mandrin après son cycle de vulcanisation.

Ainsi, conformément à l'invention, les opérations d'emmanchement et d'enlèvement de la durit sur le mandrin sont réalisées alors que celui-ci est maintenu à une température de consigne adapté techniquement auxdites opérations en sorte qu'une faible quantité de lubrifiant est nécessaire ce qui permet d'éviter les opérations de lavage nécessaires avec les dispositifs actuels.

Conformément à l'invention le fluide caloporteur est à l'état liquide à une pression inférieure à 1 bar et est de préférence de l'huile.

Dans une application où le dispositif comporte une pluralité de mandrins, ces derniers seront installés en parallèle et l'interface sera programmée de manière à assurer le caractère identique de leur température durant le cycle de production afin de garantir le critère de l'homogénéité de la qualité de la vulcanisation des durits d'un même cycle de vulcanisation.

En outre, la rapidité avec laquelle sont réalisées les opérations d'emmanchement et d'enlèvement des durits, ainsi que le maintien de la température du mandrin au dessus d'un certain seuil limitent les temps improductifs.

L'extrémité fermée du mandrin sera de préférence de forme arrondie ou conique pour faciliter l'opération d'emmanchement d'une durit et le tuyau transportant le fluide caloporteur dans le mandrin pourra être flexible pour permettre son introduction dans le mandrin et épouser les formes de celui-ci qui peuvent être diverses.

Les avantages et les caractéristiques de la présente invention ressortiront plus clairement de la description qui suit et qui se rapporte au dessin annexé, lequel en représente un mode de réalisation non limitatif.
- la figure 1 représente une vue en coupe longitudinale schématique d'un dispositif selon l'invention équipé d'une pluralité de mandrins montés en parallèles.
- la figure 2 représente une vue en coupe longitudinale d'un mandrin du dispositif selon l'invention et de la durit à vulcaniser.

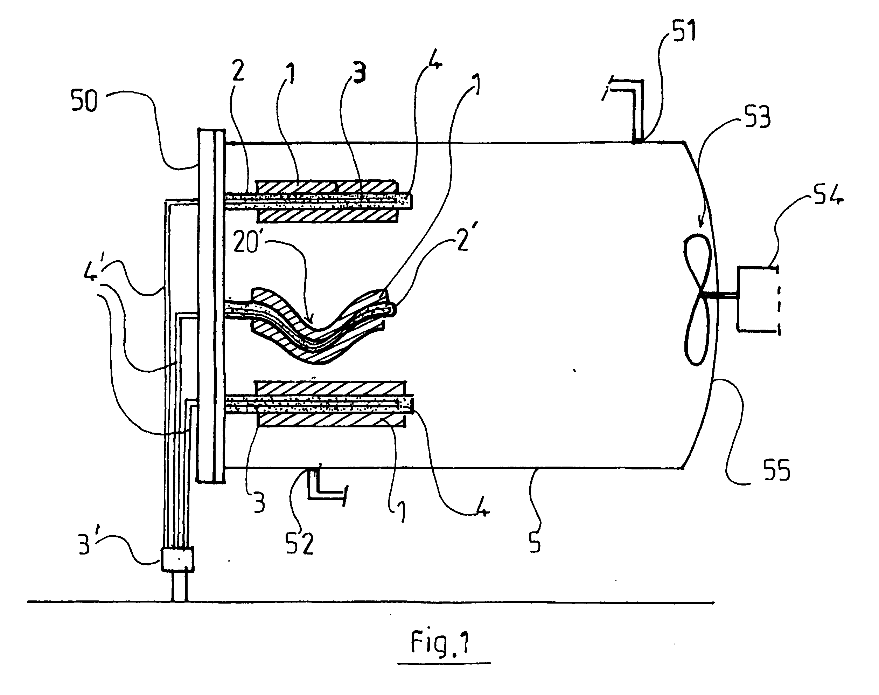

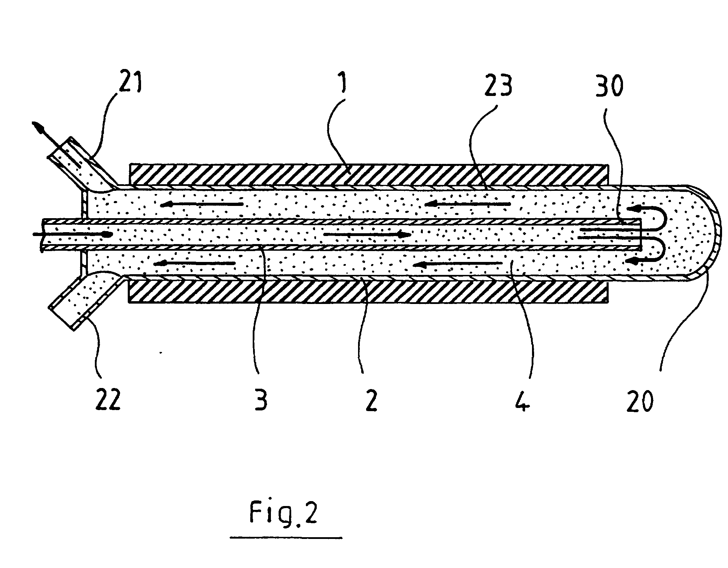

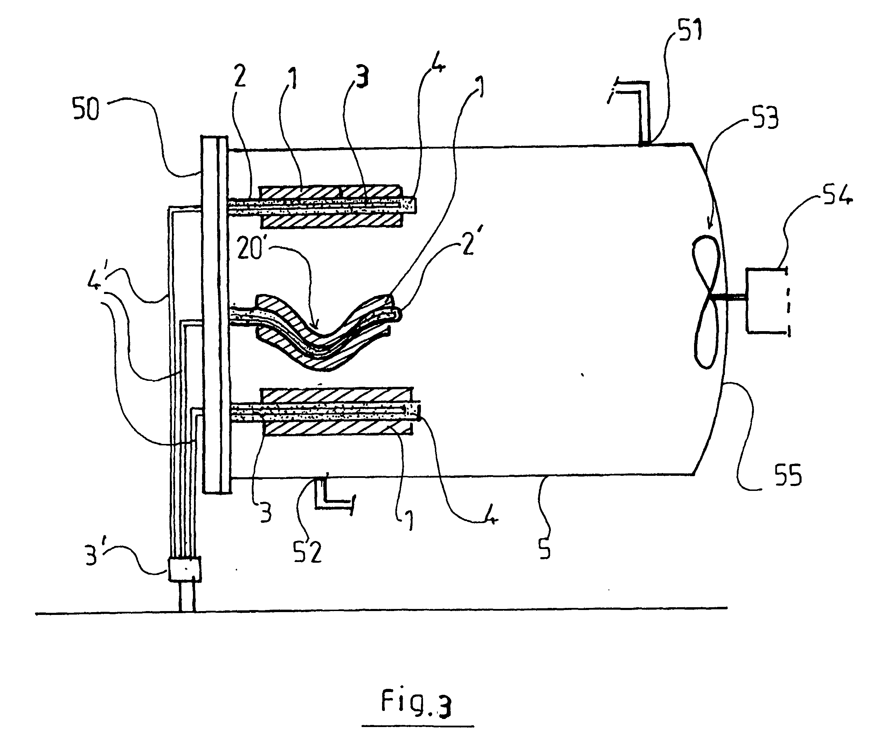

Si on se réfère aux figures 1 et 2 on peut voir un dispositif de vulcanisation selon l'invention de durits 1 en caoutchouc ou en élastomère analogue emmanchées chacune sur un mandrin 2.

Le mandrin 2 consiste en un tube d'un diamètre extérieur sensiblement égal à celui interne de la durit 1 fermé à une extrémité 20 de forme arrondie facilitant l'emmanchement de la durit 1.

L'autre extrémité du mandrin 2 est d'une part connectée à deux conduits 21 et 22, et d'autre part traversée hermétiquement par un tuyau 3 introduit dans le mandrin 2 de manière que son extrémité 30 débouche à proximité de l'extrémité fermée 20 du mandrin 2.

Le conduit 21 et le tuyau 3 sont reliés à un appareil 3' de production d'un fluide caloporteur 4 à l'état liquide à une pression inférieure à 1 bar, et de préférence de l'huile, tandis que le conduit 22 est destiné au purgeage du dispositif, il est pour cela équipé d'une vanne, non représentée.

Le fluide 4 circule en circuit fermé, il passe dans le tuyau 3 et à l'extrémité 30 de celui-ci se répand dans le mandrin 2 duquel il ressort par le conduit 21 pour retourner à l'appareil 3' de production du fluide caloporteur qui comporte un module de régulation thermique, non représenté, connecté électriquement à une interface électronique et informatique programmée, en fonction des besoins techniques industriels de la composition de la durit 1 à vulcaniser, de manière à assurer la régulation de la température du fluide 4 pour chauffer puis refroidir le mandrin 2 au cours du cycle de vulcanisation.

L'interface est également programmée pour maintenir le mandrin 2 à une température de consigne adaptée aux opérations de montage des durits 1 sur leur mandrin 2 avant le cycle de vulcanisation puis les opérations de dépose des durits 1 des mandrins 2 après leur cycle de vulcanisation. La température de consigne pourra être par exemple égale à environ 60 °C.

En passant dans le mandrin 2, le fluide 4 chauffe la paroi tubulaire 23 de celui-ci qui transmet la chaleur à la durit 1 pour en réaliser la vulcanisation. Du fait de la circulation du fluide 4 et de la régulation opérée par l'interface électronique, la température des mandrin 2 demeure quasiment constante au niveau de la partie sur laquelle est emmanchée la durit 1 correspondante.

On peut voir que les mandrins 2 sont placés dans un autoclave 5 de forme globalement cylindrique renfermant un volume de gaz neutre ou un volume d'air maintenu sous pression et sont solidarisés à la face interne d'un flasque 50, fermant l'une des extrémités de l'autoclave 5, sensiblement parallèlement à l'axe de ce dernier, et en parallèle sut l'appareil 3' de production du fluide caloporteur 4 en étant chacun relié à l'appareil 3' par un conduit 4'.

En outre on peut voir qu'un mandrin 2' présente une forme particulière, et possède un creux 20'. Le dispositif selon l'invention permet l'utilisation de ce type de mandrin dont le creux crée une poche techniquement rédhibitoire dans le cas des dispositifs utilisant un fluide caloporteur sous de vapeur d'eau entraînant une retenue de condensat avec localement une zone de température plus froide que le reste du mandrin 2'.

L'air ou le gaz neutre est introduit sous pression par une entrée 51 tandis qu'une sortie 52 permet de purger le gaz ou l'air contenu dans l'autoclave 5.

On peut voir également qu'un ventilateur 53 entraîné par un moteur électrique 54 est solidarisé sur la face interne du flasque 55 fermant l'autre extrémité de l'autoclave 5. Le ventilateur 52 permet d'effectuer un brassage et une homogénéisation thermique de l'air ou du gaz neutre introduit sous pression dans l'autoclave.

On notera que le résultat optimum est obtenu en atmosphère de gaz neutre.

L'interface sera programmée pour maintenir dans l'autoclave une pression supérieure à 1 bar pour assurer le collage des couches entre elles, au travers du tissu.

L'interface est également connectée électriquement au système de production sous pression du gaz neutre ou de l'air dans l'autoclave et programmée pour commander l'évolution dans le temps de la température de chauffage puis de refroidissement du gaz neutre ou de l'air dans l'autoclave 5.

En outre l'interface est programmée pour commander le maintien régulé de la température des mandrins 2 sortis de l'autoclave, entre deux cycles de vulcanisation, à une valeur de consigne adaptée aux opérations de montage des durits sur les mandrins 2 avant leur cycle de vulcanisation puis et aux opérations d'enlèvement des durits des mandrins 2 après leur cycle de vulcanisation.

Ainsi, après l'opération de vulcanisation, chaque durit 1 est enlevée de son mandrin 2, ce qui est réalisé aisément du fait de la température de ce dernier maintenu à la valeur de consigne.

La mise place d'une autre durit 1 peut être réalisée aussitôt, alors que le mandrin 2 est encore chaud, ce qui facilite l'emmanchement.

Cette opération ne nécessite l'emploi que d'une faible quantité de lubrifiant, lequel peut, selon la température du mandrin 2, se vaporiser dès le début du processus de vulcanisation, en sorte qu'un lavage ultérieur de la durit 1 n'est pas nécessaire.

On notera également que les mandrins 2 ne sont pas nécessairement rectilignes, il sont de forme correspondant celle des durits 1, lesquelles peuvent comporter par exemple un ou plusieurs coudes. Aussi, le tuyau 3 qu'elles renferment est avantageusement malléable ou flexible, apte à prendre la forme du mandrin 2 lorsqu'il y est introduit.

Le tuyau 3 peut ainsi être constitué d'un flexible introduit dans le mandrin 2 après cintrage de celui-ci.

Il peut également consister en un tuyau fait d'un matériau malléable, tel que du cuivre, introduit dans le mandrin 2 et coudé avec celui-ci, en utilisant un procédé de type connu qui consiste à injecter dans le mandrin 2 avant le cintrage un produit réversiblement solidifiable.

Le dispositif selon l'invention autorise des gains de productivité importants, en limitant les temps de chargement et de déchargement.

Il va de soi que la présente invention ne saurait être limitée à la description qui précède d'un de ses modes de réalisation, susceptible de subir un certain nombre de modifications sans pour autant sortir du cadre de l'invention, comme défini dans les revendications.

## Revendications

1. Dispositif de vulcanisation de durits (1) multicouches présentent des couches d'élastomères séparées par un tissu de fibres de renfort du type comportant un autoclave (5) renfermant au moins un mandrin (2, 2') consistant en un élément tubulaire de forme correspondant à celle de la durit (1) à vulcaniser, d'un diamètre sensiblement égal au diamètre interne de cette dernière et comportant intérieurement un tuyau (3) permettant d'amener un fluide caloporteur (4) à l'intérieur dudit mandrin (2, 2') **caractérisé en ce que**:
- le fluide caloporteur est à l'état liquide et est modulé en température pour le chauffage ou le refroidissement du mandrin (2, 2') au moyen d'un module de régulation thermique et **en ce que**:
- l'autoclave (5) renferme un volume de gaz neutre ou d'air maintenu sous une pression supérieure à un bar et des moyens (53, 54) de brassage et d'homogénéisation thermique dudit volume de gaz ou d'air,
- une interface informatique permet de programmer un cycle de régulation des paramètres de vulcanisation comprenant d'une part l'évolution dans le temps de la température de chauffage puis de refroidissement du mandrin (2, 2'), d'autre part l'évolution dans le temps de la température de chauffage puis de refroidissement du gaz neutre ou de l'air dans l'autoclave (5) et d'autre part encore l'évolution dans le temps de la pression supérieure à un bar du gaz neutre ou de l'air dans ledit autoclave (5),
- et **en ce que** ladite interface permet de programmer le maintien régulé de la température du mandrin (2, 2') à une valeur de consigne entre deux cycles de vulcanisation.

2. Dispositif selon la revendication 1 **caractérisé en ce que** le fluide caloporteur (4) à l'état liquide circulant dans le mandrin (2 ,2') est une huile à une pression inférieure à 1 bar.

3. Dispositif selon l'une quelconque des revendications précédentes **caractérisé en ce qu'**il comporte une pluralité de mandrins (2,2') installés en parallèle et **en ce que** l'interface est programmée de manière à assurer le caractère identique de leur température durant le cycle de production.

## Patentansprüche

1. Vulkanisier-Vorrichtung für mehrschichtige, aus durch ein Gewebe aus Verstärkungsfasern getrennten Elastomerschichten bestehende Schläuche (1), Vorrichtung vom Typ mit Autoklav (5), beinhaltend mindestens einen Dorn (2, 2'), bestehend aus einem rohrfönnigen Element mit einer Form, die der Form des zu vulkanisierenden Schlauchs (1) entspricht und mit einem Durchmesser, der ziemlich genau dem Innendurchmesser des Schlauchs entspricht und im Innern mit einem Rohr (3) ausgestattet, das zur Zuführung von Wärmeübertragungsmittel (4) ins Innere besagten Dorns (2, 2') dient, **dadurch gekennzeichnet, daß**:
- das Wärmeübertragungsmittel sich im flüssigen Zustand befindet und seine Temperatur zwecks Beheizung oder Kühlung des Dorns (2, 2') mit Hilfe eines Temepraturreglermoduls moduliert wird und **dadurch, daß**:
- der Autoklav (5) ein bestimmtes Volumen an neutralem Gas oder Luft enthält, das/ die mit einem Druck von über einem Bar beaufschlagt wird und Mittel (53, 54) zur Umwälzung und zur thermischen Homogenisierung besagter Gas- oder Luftmenge,
- eine EDV-Schnittstelle zur Programmierung eines Regelungszyklus der Vulkanisierungsparameter dient, der einerseits einen zeitlichen Heiz- mit anschließendem Kühltemperaturverlauf für den Dorn (2, 2'), andererseits einen zeitlichen Heiz- mit anschließendem Kühltemperaturverlauf für das neutrale Gas bzw. die Luft im Autoklav (5) und zusätzlich einen zeitlichen Druckverlauf des über ein Bar betragenden Drucks des neutralen Gases bzw. der Luft im Autoklav (5) beinhaltet,
- und **dadurch, daß** besagte Schnittstelle die Programmierung der geregelten Temperaturhaltung des Dorns (2, 2') zwischen zwei Vulkanisierungszyklen auf einen Sollwert ermöglicht.

2. Vorrichtung gemäß Patentanspruch 1, **dadurch gekennzeichnet, daß** es sich bei dem in flüssigem Zustand im Dorn (2, 2') zirkulierenden Wärmeübertragungsmittel (4) um ein Öl handelt, dessen Druck unter ein Bar beträgt.

3. Vorrichtung gemäß einem beliebigen der obigen Patentansprüche, **dadurch gekennzeichnet, daß** sie eine Vielzahl von Dornen (2, 2') in Parallelschaltung beinhaltet und dadurch, daß die Schnittstelle so programmiert ist, daß der identische Charakter ihrer Temperatur im Verlauf des Produktionszyklus sichergestellt wird.

## Claims

1. Device for the vulcanization of multi-layered hoses (1) with layers of elastomers separated by a reinforcing fibre fabric, of the type including an autoclave (5) containing at least one mandrel (2, 2') consisting of a tubular component in a shape corresponding to that of the hose (1) to be vulcanised, with a diameter approximately equal to the internal diameter of the latter and including inside it a pipe (3) allowing a heat-transfer fluid (4) to be carried to the inside of the said mandrel (2, 2') **characterized in that**:
- the heat-transfer fluid is in the liquid state and its temperature is modulated to heat or cool the mandrel (2, 2') by means of a thermal control module, and **in that**:
- the autoclave (5) contains a volume of inert gas or air maintained at a pressure higher than one bar and means (53, 54) of stirring and thermal homogenisation of the said volume of gas or air,
- a computer interface allows the programming of the cycle of adjustment of the vulcanization parameters, including on the one hand the changes over time in the temperature for heating and then cooling the mandrel (2, 2'), on the other hand, the changes over time in the temperature for heating then cooling the inert gas or air in the autoclave (5), and also the changes over time in the pressure of more than one bar of the inert gas or air in the said autoclave (5),
- and **in that** the said interface allows the controlled maintaining of the temperature of the mandrel (2, 2') to be programmed at a set point between two vulcanisation cycles.

2. Device according to claim 1 **characterized in that** the heat-transfer fluid (4) in the liquid state circulating in the mandrel (2, 2') is an oil with a pressure of less than one bar.

3. Device according to any one of the previous claims **characterized in that** it includes a large number of mandrels (2, 2') installed in parallel and **in that** the interface is programmed so that the identical character of their temperature is guaranteed throughout the production cycle.
